# EUROPEAN PATENT SPECIFICATION

(11) **EP 0 477 553 B1**
(45) Date of publication and mention of the grant of the patent: **18.06.1997**
(21) Application number: 91114341.0
(22) Date of filing: 27.08.1991
(51) Int. Cl.: H04L 12/26, H04L 12/56

(54) **Channel testing apparatus**
Gerät zum Testen von Kommunikationskanälen
Dispositif pour tester des canaux de communications

(30) Priority: 27.08.1990 JP 222425/90; 20.10.1990 JP 282628/90; 20.10.1990 JP 283043/90
(43) Date of publication of application: 01.04.1992
(60) Divisional application: 95106654.7
(73) Proprietor: FUJITSU LIMITED, Kawasaki-shi, Kanagawa 211 (JP)
(72) Inventor: Uchida, Yoshihiro, Takatsu-ku, Kawasaki-shi, Kanagawa 213 (JP); Kakuma, Satoshi, Kawasaki-shi, Kanagawa 211 (JP); Izawa, Naoyuki, Mitaka-shi, Tokyo 181 (JP); Aso, Yasuhiro, Nerima-ku, Tokyo 176 (JP); Yoshimura, Shuji, Kawasaki-shi, Kanagawa 213 (JP); Murayama, Masami, Yokohama-shi, Kanagawa 227 (JP)
(74) Representative: Lehn, Werner, Dipl.-Ing.

(56) References cited:
- EP-A- 0 351 014
- US-A- 4 486 877
- 1986 INTERNATIONAL ZURICH SEMINAR ON DIGITAL COMMUNICATIONS, 11th-13th March 1986, pages 135-139, Proceedings IEEE Catalog no. 86CH2277-2, Zürich, CH; R.W: MUISE et al.: "Experiments in wideband packet technology"
- IBM TECHNICAL DISCLOSURE BULLETIN, vol. 31, no. 8, January 1989, pages 414-427, Armonk, NY, US; "Method and arrangement for testing switch-network components"

## Description

### Background of the Invention

### Field of the Invention

This invention pertains to a digital switching system and more particularly to an apparatus for testing ATM (Asynchronous Transfer Mode) channels, according to a multi-stage self-routing method, to integrally switch information having different traffic characteristics, such as moving images, numerical data and voices, by using an ATM transmission system like a broadband ISDN.

### Description of the Related Art

With the widespread use of data communication, public switched networks are now required to execute high-quality data communication, as well as the traditional voice communication.

A Broadband Integrated Services Digital Network (B-ISDN) has begun to be utilized as a communication network not only for low-speed data, such as voice data, but also for high-speed data between 150 Mbps and 600 Mbps, such as moving images, and various interfaces have begun to be standardized. CCITT (International Telegraph and Telephone Consultative Committee) is currently working on its advisory report on the ATM transmission system, which is an essential technology for realizing a B-ISDN, to be submitted in 1992.

An ATM communication network transmits and exchanges information of different bands divided and housed in fixed-length data units called cells, to which headers are added. A header contains a virtual channel identifier (VCI) for identifying the receiving side subscriber. Thus, an ATM switching system uses the headers to enable hardware to transfer and switch cells to the receiving side subscriber at a high speed.

Since an ATM system requires cells to carry only necessary information, it can more efficiently transmit bust signals than a conventional STM (Synchronous Transfer Mode) system. Also, unlike a conventional packet switching system that has a processor switch cells equivalent to packets through software processing, since an ATM system has hardware provided in a channel switch cells, it does not require complex protocols in switching cells, which realizes high speed communication at up to several hundred mega bits a second.

This makes it possible to flexibly provide services requiring different transmission speeds, and to efficiently utilize transmission paths.

In this operation, according to the VCI attached to a cell, a switching system processor designates to which buffer in a switch of the ATM switching system the cell is to be written. The cells flow autonomously in the network according to this designation. Hence, this switching operating is called a self-routing (SR). The receiving side subscriber extracts necessary cells flowing over ATM highways based on the VCIs attached to cells, and restores user information by eliminating headers from the cells.

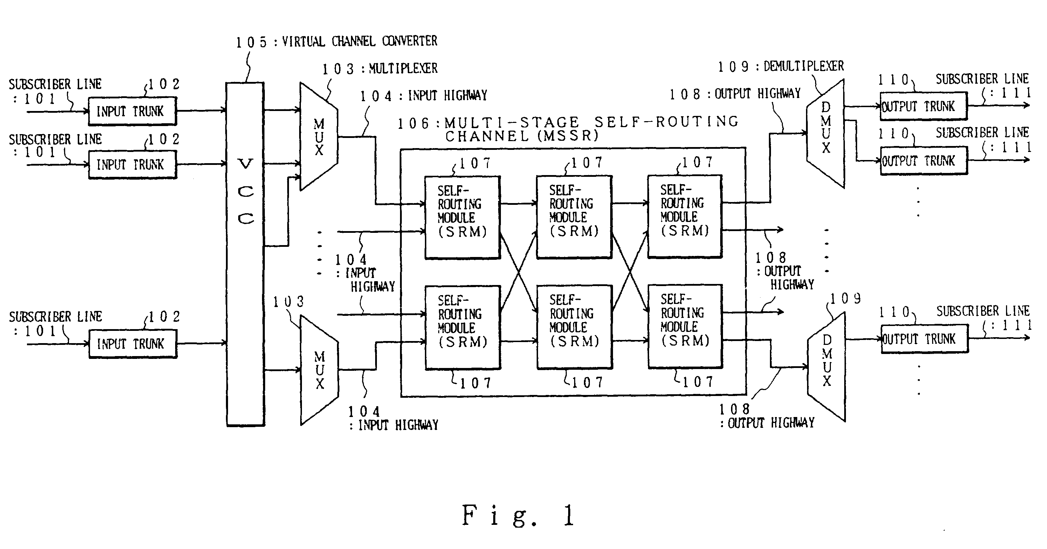

Figure 1 is a schematic view of a generic ATM switching system.

In Figure 1, trunks 102 accommodate respective subscriber lines 101 on the input side. A virtual channel controller (VCC) 105 receives outputs from the trunks 102.

Based on the call control information inputted from a processor (not shown) of the switching system, the VCC 105 exchanges the VCIs, which specify the cells' destinations, attached to the headers of the received cells from the respective input highways 104, with new VCIs specifying the next output node (ATM switching system). At the same time, the VCC 105 adds to the head ends of the cells information specifying the path over which the cells are to be switched to be outputted to destined output highways 108 in a data format called tags.

A plurality of multiplexers (MUXs) 103 partially multiplex respective outputs from the VCC 105. Respective input highways 104 receive outputs from the corresponding multiplexers 103.

A multi-stage self-routing channel (MSSR) 106, which is a virtual channel, receives respective outputs from the MUXs 105. The MSSR 106 comprises a plurality of self-routing modules (SRMs) 107. The MSSR 106 has a plurality (ordinarily two (2) rows and three (3) stages) of SRMs 107. The configuration of the SRMs 107 are further elaborated later.

The MSSR cells to output highways 108, which are connected to respective demultiplexers (DMUXs) 109, which demultiplex the cells and output the demultiplexed cells to subscriber lines 111 on the output side through output trunks 110 corresponding to the respective DMUXs 109.

Figure 1 shows a configuration where cells flow in a single direction over the channels. It goes without saying that channels for cells flowing in the opposite directions can be configured similarly.

Figure 2 shows an exemplary configuration of one of the SRMs 107 shown in Figure 1.

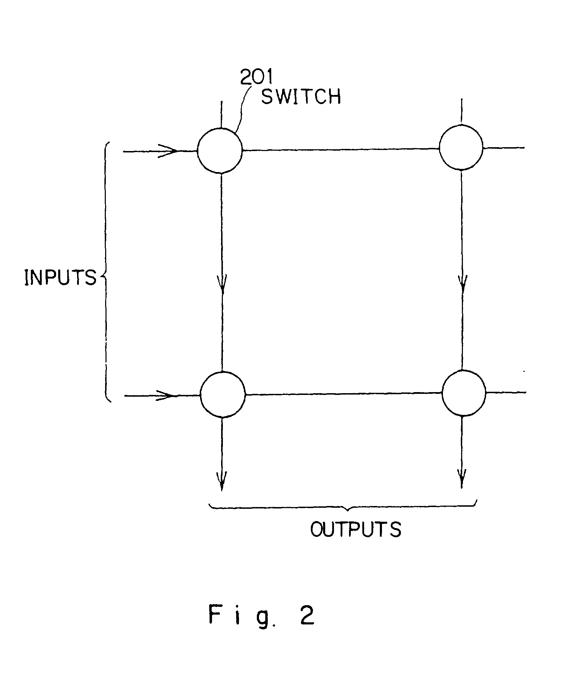

In the example shown in Figure 2, an SRM 107 has two (2) input lines and two (2) output lines, and switches 201 provided at the four (4) crossing points of the input lines and output lines. That is, the four (4) switches of an SRM 107 correspond with two (2) input lines and two (2) output lines. Although an actual channel comprises more input lines and more output lines in reality, since their basic connections are entirely similar to those in the example shown in Figure 2, the SRMs 107 are explained by referring to the 2X2 exemplary configuration having two (2) input lines and two (2) output lines.

The switches 201 judge from the tag data attached to the head ends of cells inputted from input lines whether or not to switch the cells for acceptance. If the switches 201 judge to switch the cells, the switches 201 multiplex the cells on free time slots on output lines. Respective switches 201 independently perform the judging and switching operations through hardware processing.

As is evident from the above explanation, a fault in one of the switches 201 in any of the SRMs 107 shown in Figure 1 causes a severe fault, such as a degradation in communication quality and a stoppage of communication through discarding ATM cells and incorrectly switching ATM cells. Therefore, it is crucial to conduct a test for verifying the normality of the switches.

However, there is no known conventional system for efficiently testing the switches of an ATM switching system. Especially in the configuration, shown in Figure 1, of the MSSR 106 having the SRMs 107 connected in a plurality of stages, the more there are possible paths from an input line to an output line, the more there are the SRMs 107 in the MSSR 106. This causes an inevitable problem of how to efficiently test all such possible paths in realizing an ATM switching system.

US-A-4 486 877 shows a packet switching system with networks having central processors. A single test packet can be transmitted to enable the processor to carry out fault detection and isolation across trunks and controllers in the network.

EP-A-0 351 014 shows a coupling array for a network switching system.

This invention is conceived based on the above background, and aims at providing an improved apparatus. According to the invention, there is provided apparatus as set out in claim 1.

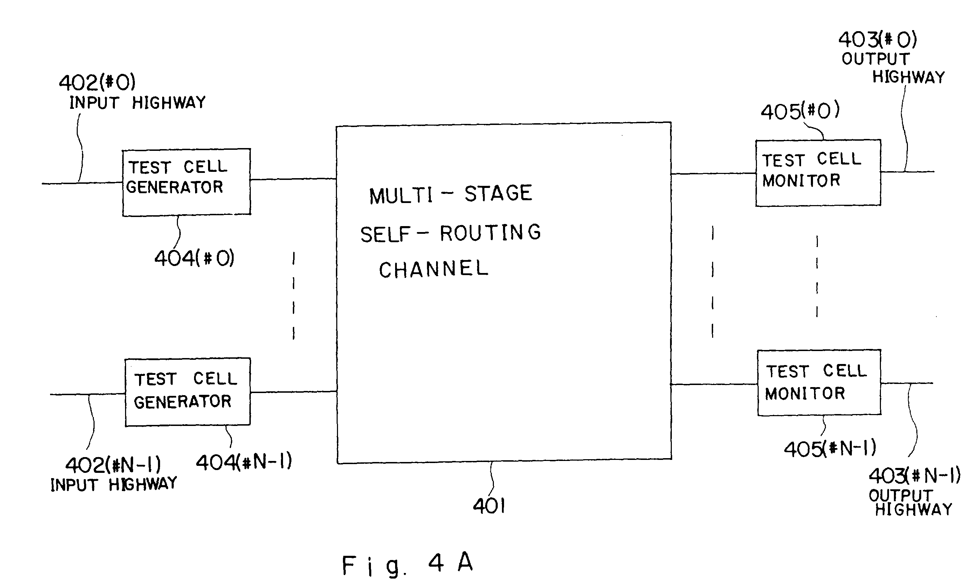

In the following, Figures 4A, 4B, 5 and 9 to 22, relating to the second and third forms of the invention, do not show all the features of the invention, but are included for explanatory purposes.

The above described form of this invention enables switches to be tested under actual operation without interrupting channel processing, e.g. by inputting a test cell to an asynchronous transfer mode channel at a free cell timing on an input highway.

Because the test cell generating trunk generates test cells having tags at the head ends storing test cell data collectively specifying the passages of all switches in the asynchronous transfer mode channel relevant to the input highway connected to the test cell generating trunk, and because the controller collect all maintenance signals from the test cell detectors in the respective switches, it becomes possible to perform efficient tests.

The above described first form of this invention enables an asynchronous transfer mode channel to be efficiently tested, even when the channel has a complex configuration, such that the channel is a multi-stage self-routing module with self-routing modules each having switches connected in plural stages.

The controller enables a simple control to test switches with ease, e.g. by judging whether or not the test cell detector of a switch on a path corresponding to the test cell data stored in a test cell detects a maintenance scan signal in a predetermined time period after the test cell is generated.

### Brief Description of the Drawings

Those in the same field can easily understand additional purposes and features of this invention from the descriptions of the principles and the preferred embodiments of this invention together with the attached drawings. In the drawings;
Figure 1 is a schematic view of a generic ATM switching system;
Figure 2 shows an exemplary configuration of one of the SRMs shown in Figure 1;

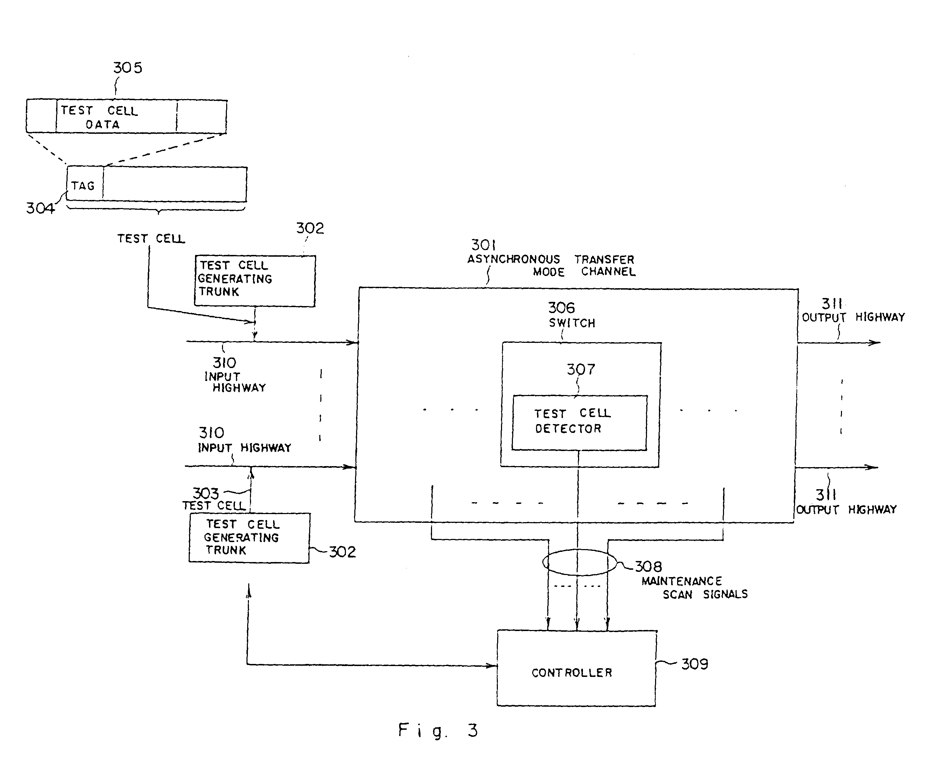

Figure 3 is a schematic view for explaining a first form of this invention;
Figure 4A is a schematic view for explaining a second form of this invention;

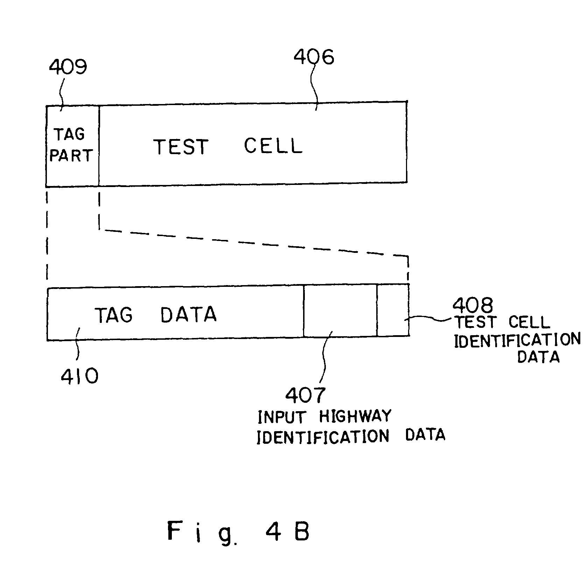

Figure 4B shows the data structure of a test cell in the second form of this invention;

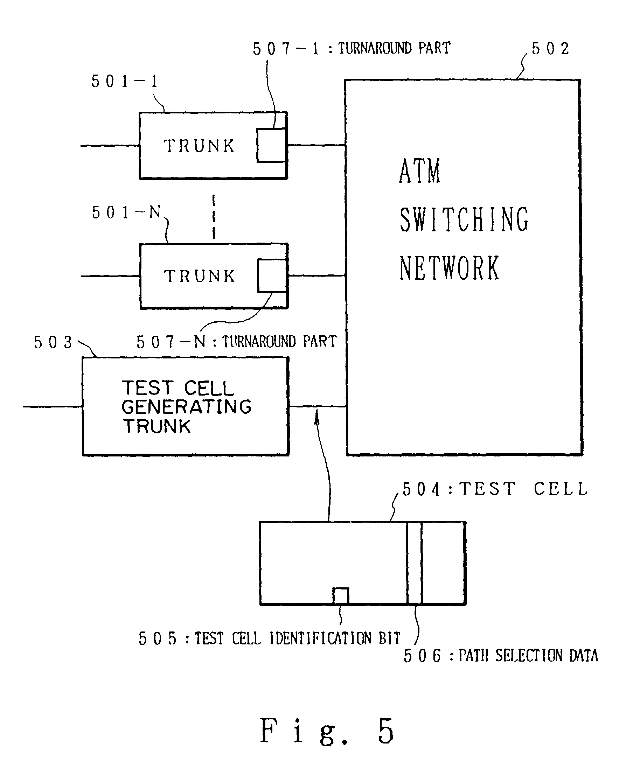

Figure 5 is a schematic view for explaining a third form of this invention;

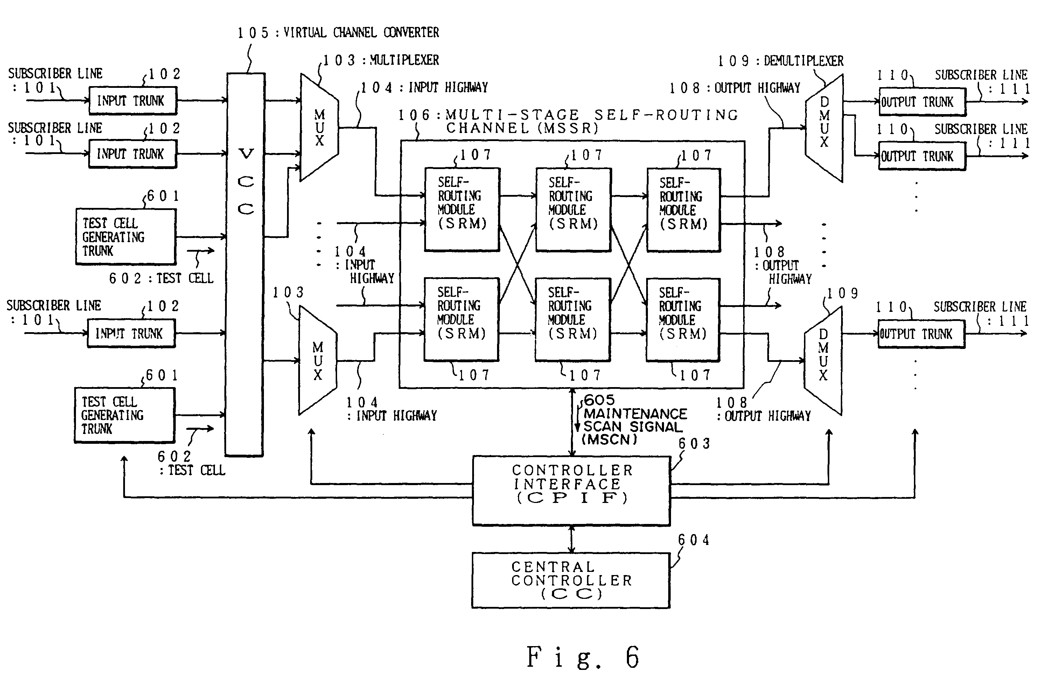

Figure 6 is a block diagram of a first preferred embodiment of this invention;

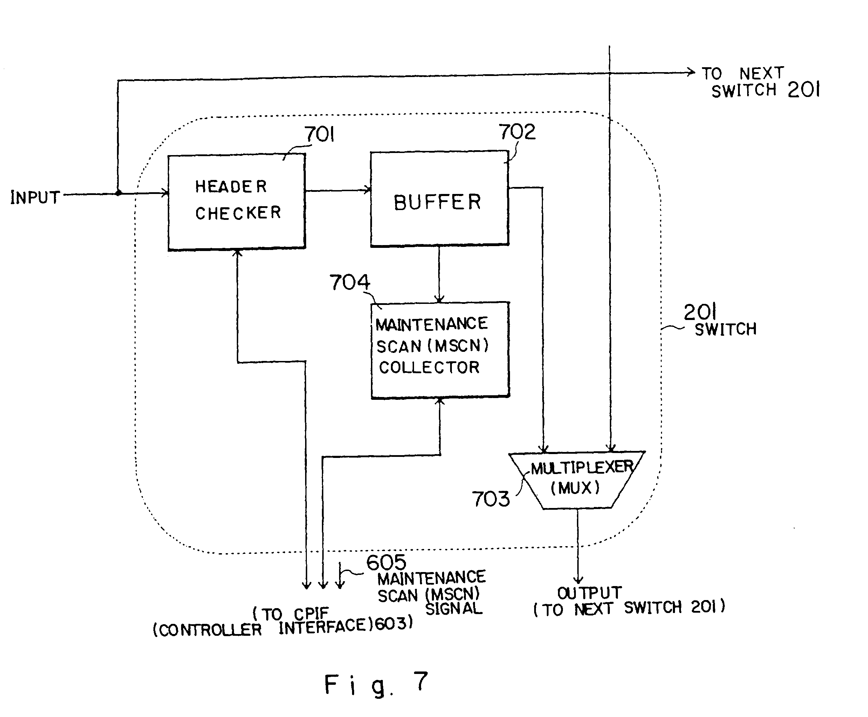

Figure 7 shows the configuration of a switch in an SRM in the first preferred embodiment;

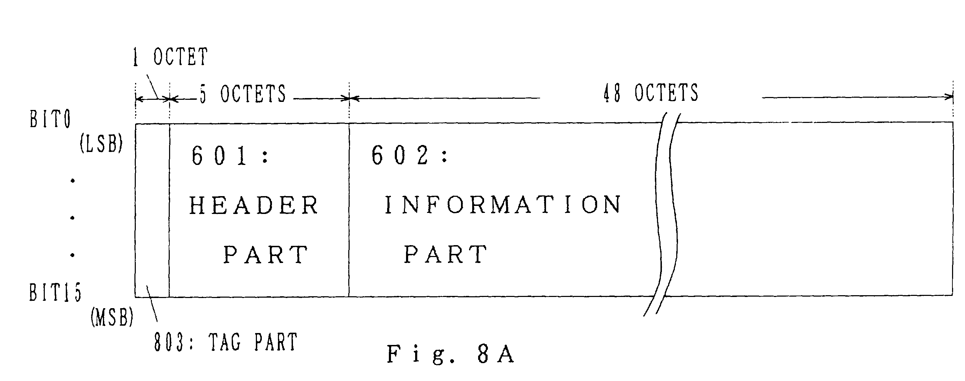

Figure 8A shows the data configuration of an ATM cell in the first preferred embodiment;

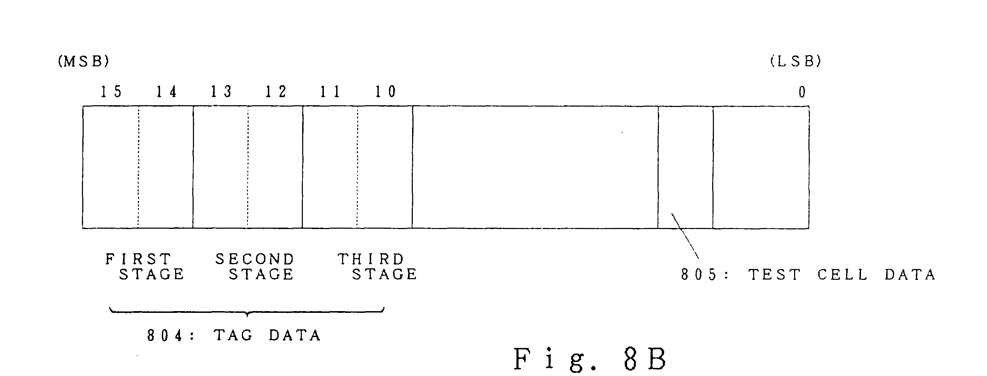

Figure 8B shows the configuration of the tag part of an ATM cell shown in Figure 8A;

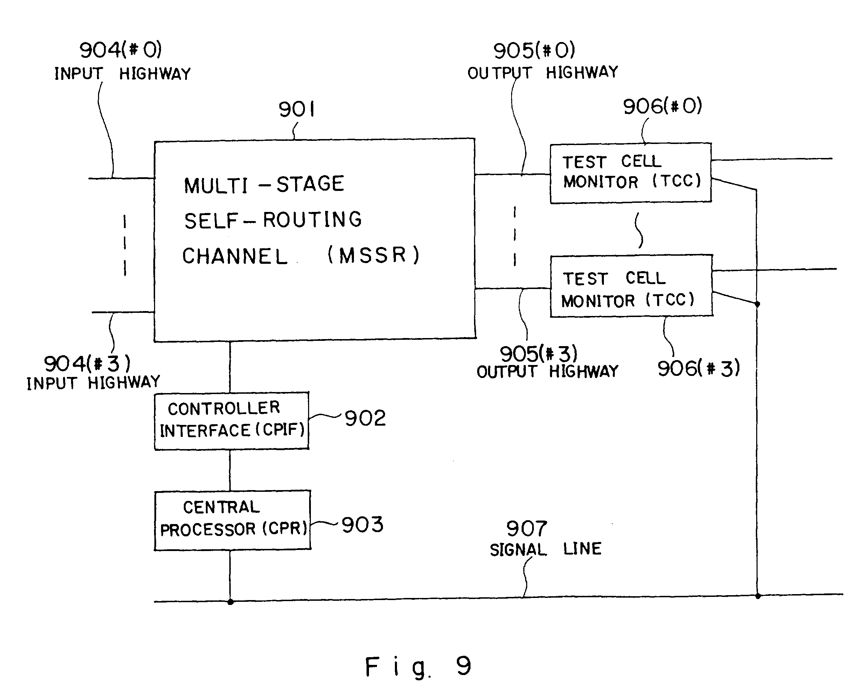

Figure 9 is a block diagram of a second preferred embodiment of this invention;

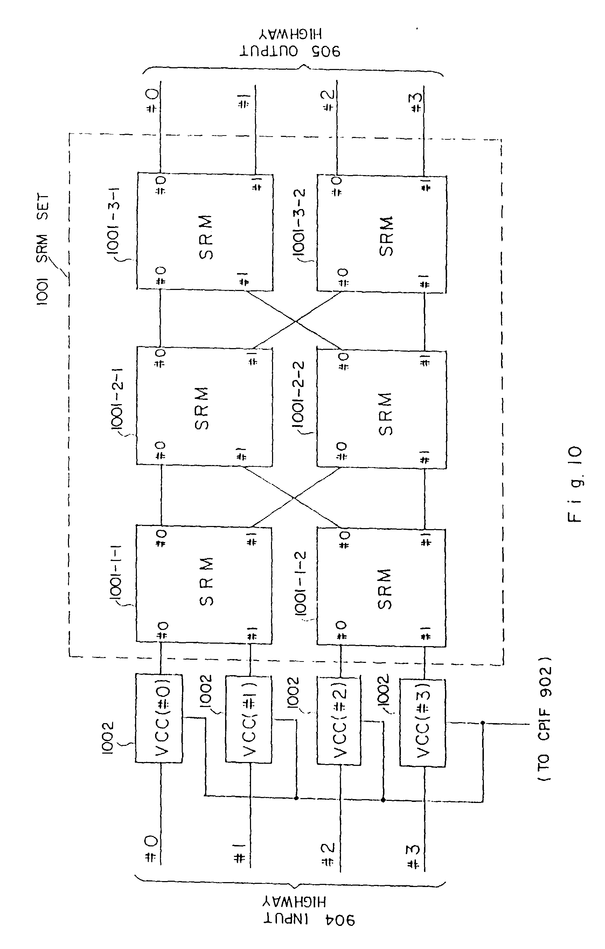

Figure 10 shows the configuration of the MSSR in the second preferred embodiment;

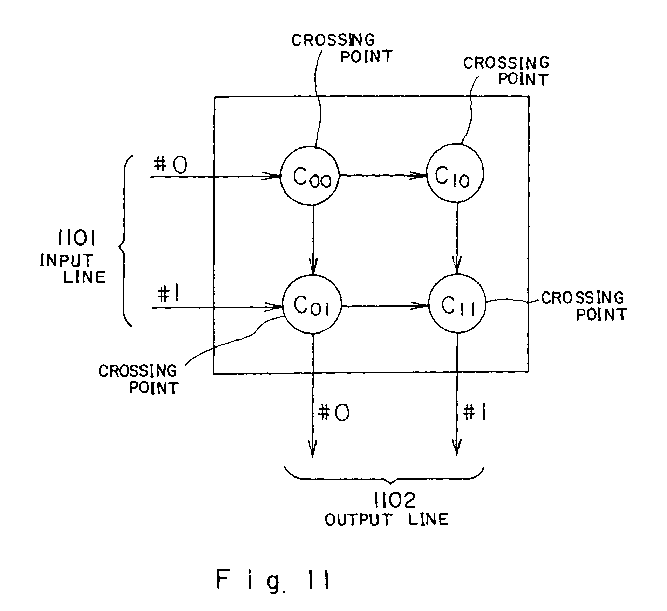

Figure 11 shows the configuration of an SRM in the second preferred embodiment;

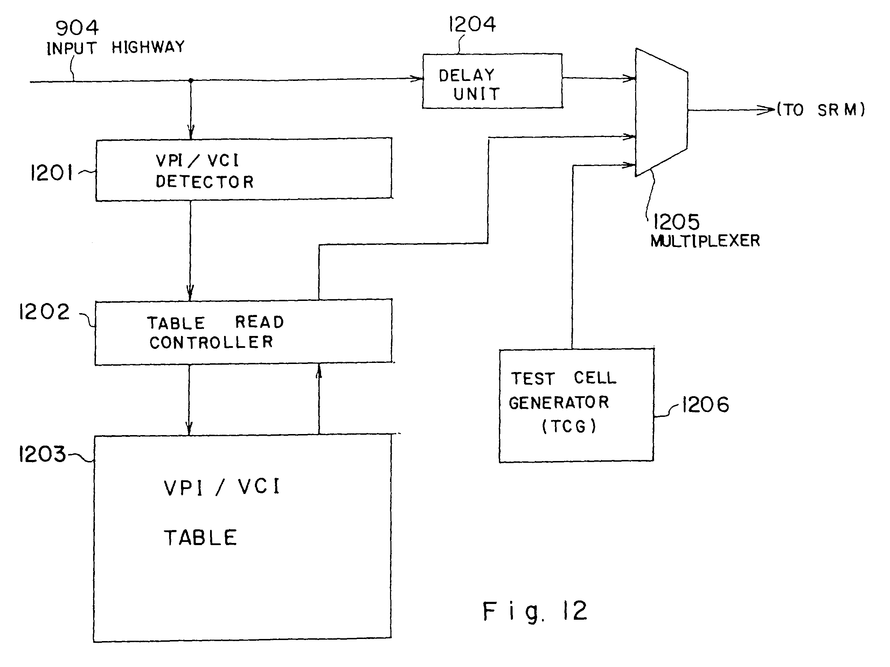

Figure 12 shows the configuration of the VCC in the second preferred embodiment;

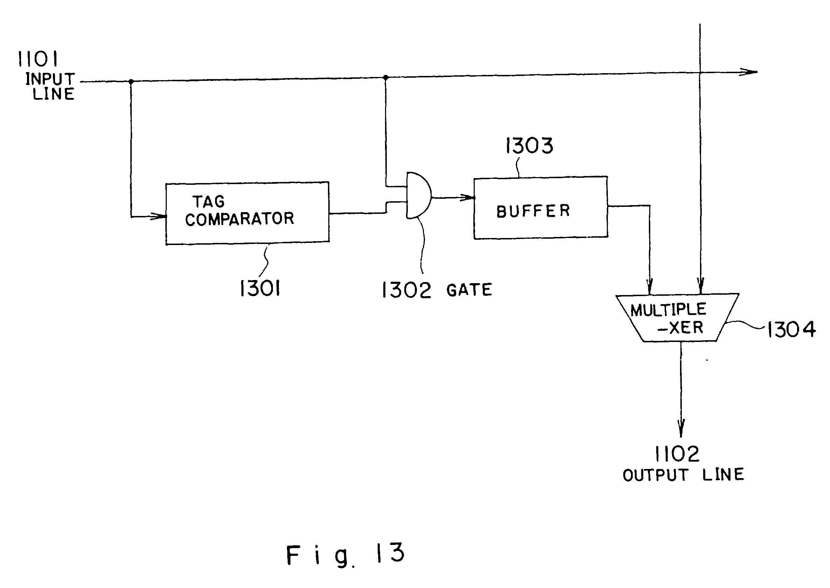

Figure 13 shows the configuration of a crossing point in the second preferred embodiment;

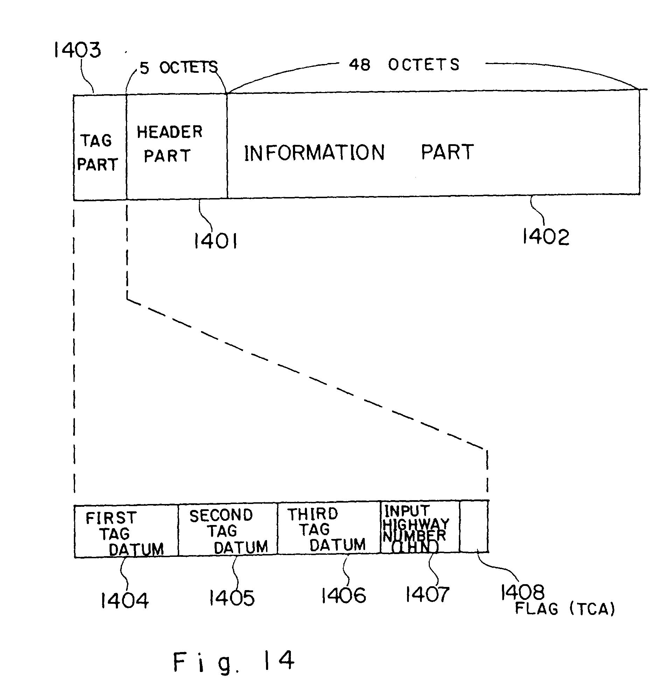

Figure 14 shows the configuration of an ATM cell in the second preferred embodiment;

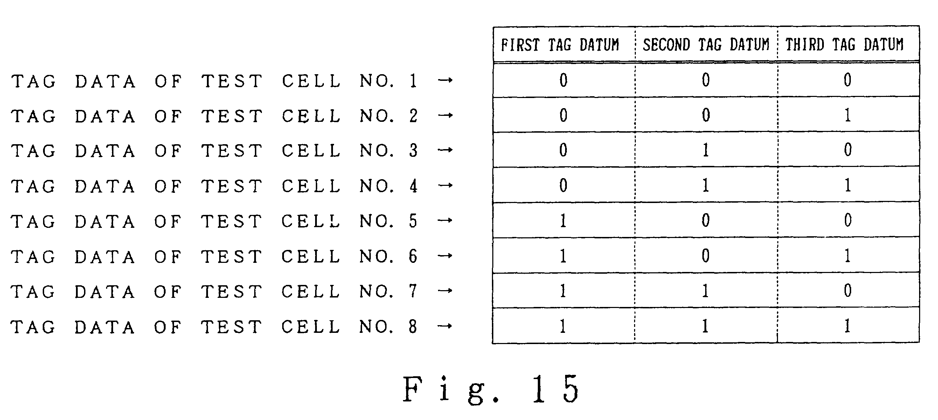

Figure 15 shows the tag datum combinations in tag parts attached to test cells in the second preferred embodiment;

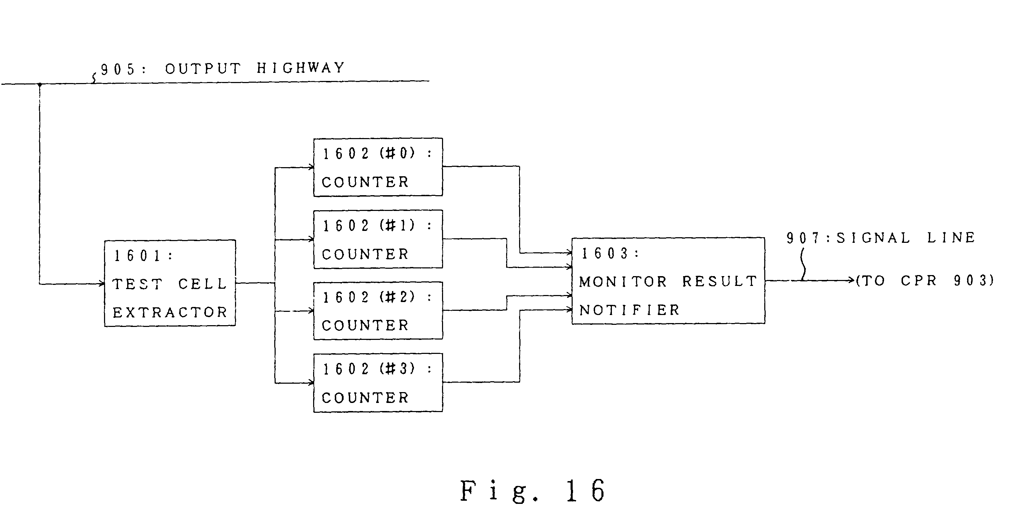

Figure 16 shows the configuration of the TCC in the second preferred embodiment;

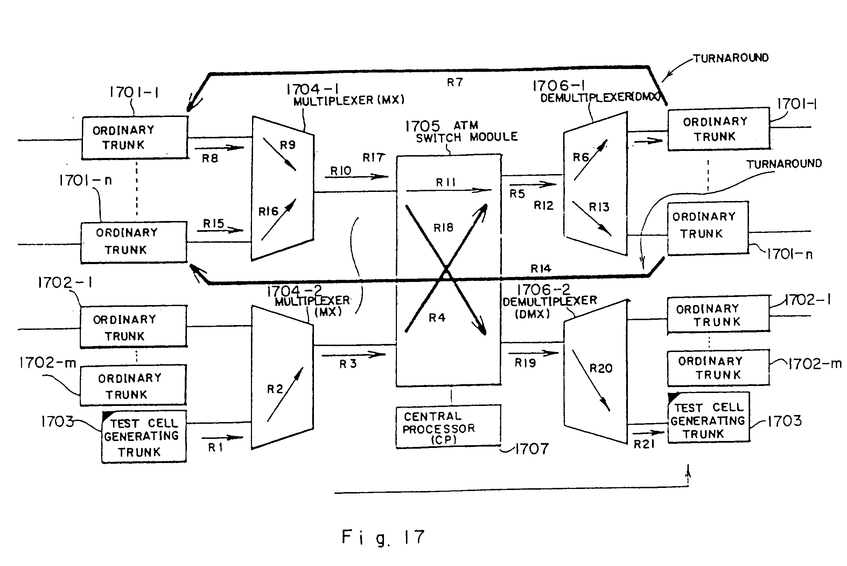

Figure 17 is a block diagram of a third preferred embodiment of this invention;

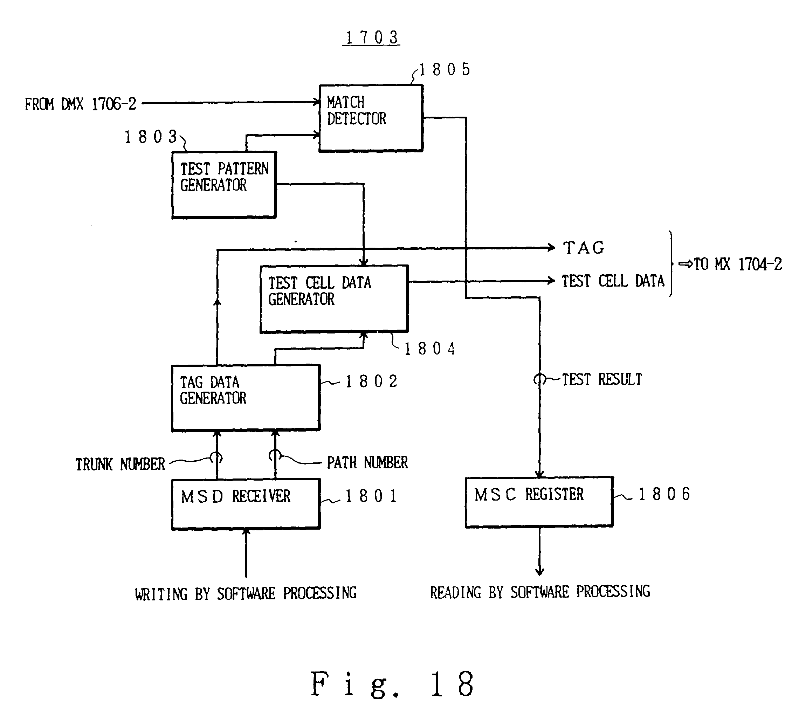

Figure 18 shows the configuration of the test cell generating trunk in the third preferred embodiment;

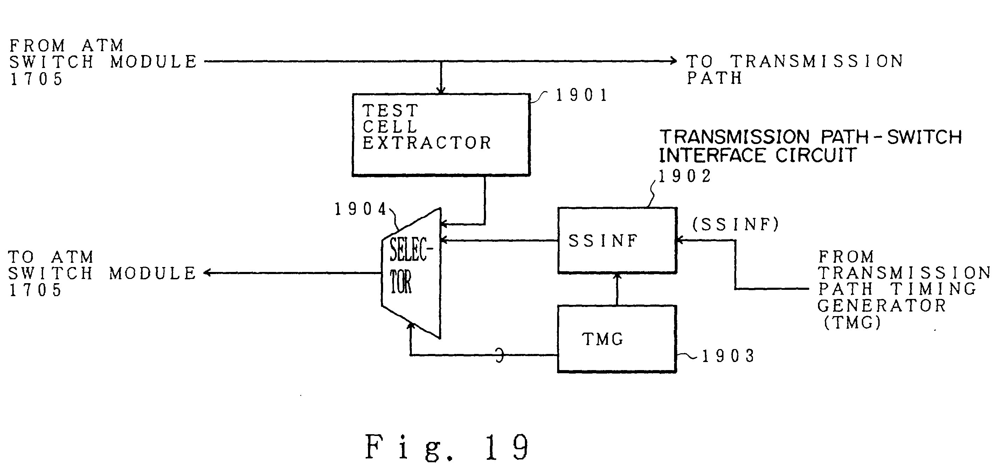

Figure 19 shows the configuration of the turnaround part of a tested trunk in the third preferred embodiment;

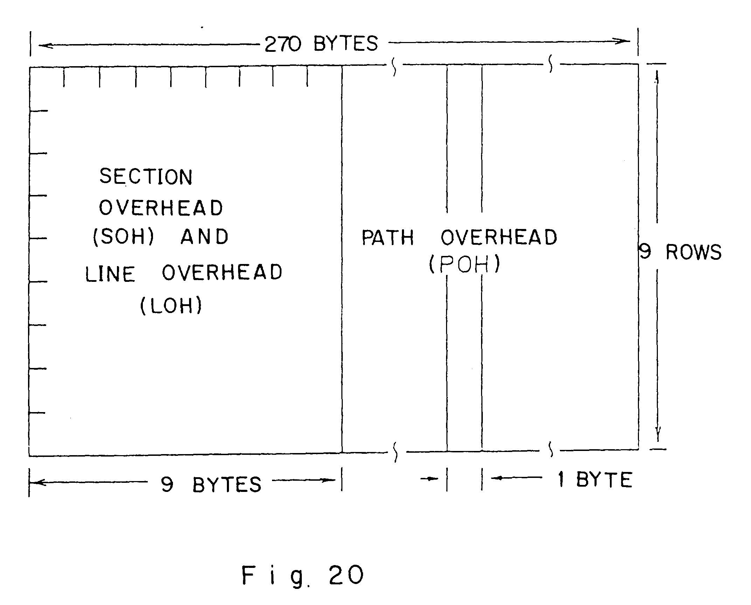

Figure 20 shows the data format of a transmission path in the third preferred embodiment;

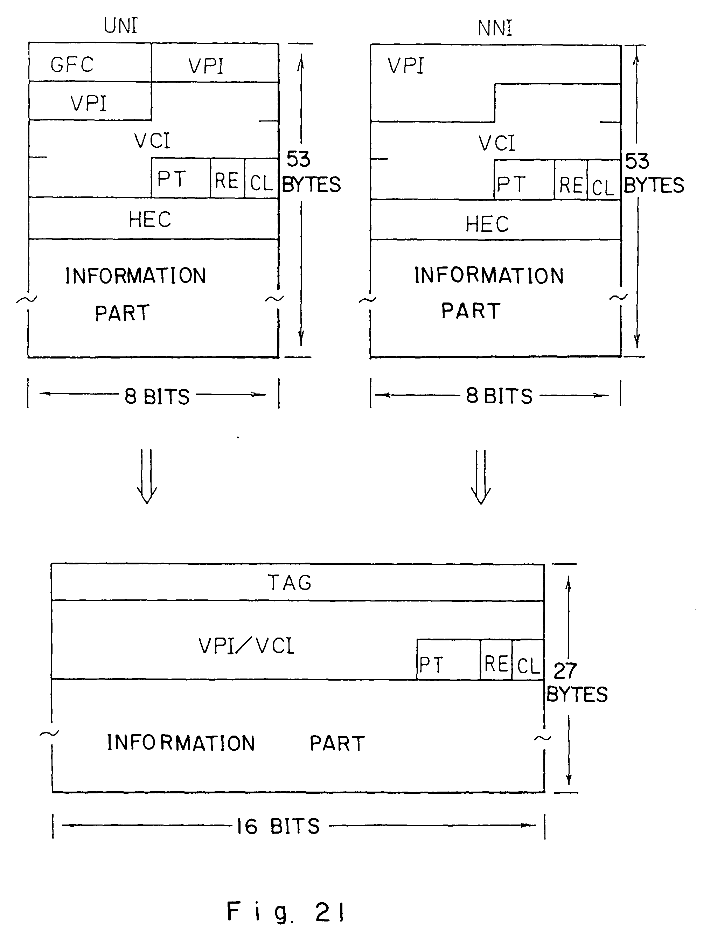

Figure 21 illustrates the cell format conversion in the third preferred embodiment; and

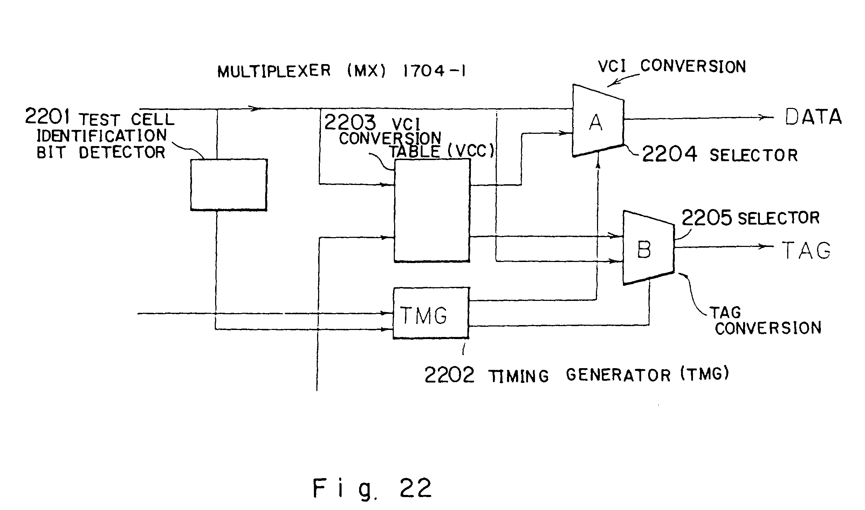

Figure 22 shows the configuration of the tag operator in an multiplexer in the third preferred embodiment.

### Description of the Preferred Embodiments

### Explanation of the Principles

Before describing the preferred embodiments of this invention, its principles are explained.

Figure 3 is a schematic view for explaining a first form of this invention.

A test cell generating trunk 302 is provided on the input side of an asynchronous transfer mode channel 301. The test cell generating trunk 302 generates a test cell 303 having a tag 304 at the head end and inputs the test cell 303 to the asynchronous transfer mode channel 301. The tag 304 stores test cell data 305 for test cell identification and for specifying the passage of a predetermined path in the asynchronous transfer mode channel 301.

Here, the asynchronous transfer mode channel 301 is a multi-stage self-routing channel e.g. having plural stages of self-routing modules. As shown in Figure 3, it switches a cell inputted from an input highway 310 and output it to an output highway 311.

Input highways 310 connected to the input side of the asynchronous transfer mode channel 301 have the respective test cell generating trunks 302, which multiplex the test cells 303 on the corresponding input highways 310 at a free cell timing of the input highways 310.

As already stated, the test cell generating trunk 302 generates a test cell 303 having a tag 304 at the head end and inputs the test cell 303 to the asynchronous transfer mode channel 301. The tag 304 stores test cell data 305 for test cell identification and for specifying the passage of all switches 306, relevant to the input highways 310 corresponding to the test cell generating trunk 302, in the asynchronous transfer mode channel 301.

Test cell detectors 307 are provided respectively in the switches 306 forming the asynchronous transfer mode channel 301. Each of them detects, as a maintenance scan signal 308, whether or not the test cell 303 is switched.

A controller 309 tests the switches 306 on a path corresponding to the test cell data stored in a test cell 303 by judging, in synchronization with test cell generation, whether or not the test cell detectors 307 of the switches 306 of the path detect maintenance scan signals 308.

The controller 309 tests switches 306 on the path corresponding to the test cell data 305 stored in the test cell 303, e.g. by judging whether or not the test cell detector 307 of a switch 306 on a path detects a maintenance scan signal in a predetermined time period after the test cell 303 is generated. The controller 309 is e.g. the central controller of the ATM switching system.

The above described configuration shown in Figure 3, where the input highways 310 connected to the input side of the asynchronous transfer mode channel 301 respectively have the test cell generating trunks 302, enables switches 306 to be tested under actual operation without interrupting channel processing, e.g. by multiplexing a test cell 303 on the input highways 310 at a free cell timing.

The test cell generating trunk 302 generates test cells 303 having tags 304 at the head ends storing test cell data 305 collectively specifying the passages of all switches 306 in the asynchronous transfer mode channel 301 relevant to the input highway 310 connected to the test cell generating trunk 302. The controller 309 collect all maintenance signals 308 from the test cell detectors 307 in the respective switches 306. These operations enable tests to be performed efficiently.

The above described configuration shown in Figure 3 enables an asynchronous transfer mode channel to be efficiently tested, even when the asynchronous transfer mode channel 301 has a complex configuration, such that the asynchronous transfer mode channel 301 is a multi-stage self-routing module with self-routing modules each having switches 306 connected in plural stages.

The controller 309 enables a simple control to test switches 306 with ease, e.g. by judging whether or not the test cell detector 307 of a switch 306 on a path corresponding to the test cell data 305 stored in a test cell 303 detects a maintenance scan signal 308 in a predetermined time period after the test cell 303 is generated.

Figure 4A is a schematic view for explaining a second form of this invention, and Figure 4B shows the data structure of a test cell in the second form of this invention.

The second form of this invention is premised on an ATM channel formed by a multi-stage self-routing channel, comprising self-routing modules 401 connected in plural stages, for switching for connection respective cells inputted from a plurality (any of #0 through #n-1, where n is a integer) of input highways 402 to a plurality (any of #0 through #m-1, where m is an integer) of output highways 403.

Test cell generators 404 are provided for respective input highways 402. A test cell generator 404 sequentially generates a plurality of test cells 406. The test cells 406 are switched at crossing points in all self-routing modules, where cells inputted from the input highway 402 corresponding to the test cell generator 404 pass through. The test cells 406 have test cell identification data 408 for test cell identification and the input highway identification data 407.

The test cell generators 404 are provided respectively e.g. in virtual path identifiers or virtual channel converters for converting virtual channel identifiers into tag data. As shown in Figure 4B, tag data 410 for enabling crossing points in all self-routing modules, through which cells inputted from input highways 402 pass, to respectively switch the cells are attached to a tag part 409 at the head ends of plural test cells 406 generated by the test cell generator 404. Input highway identification data 407 and test cell identification data 408 are attached to free regions in the tag part 409 at the head end of a test cell 406, e.g. as shown in Figure 4B.

Test cell monitors 405 are provided for respective output highways 403. A test cell monitor 405 extracts by test cell identification data 408 test cells 406 from cells outputted from self-routing modules 401 to respective output highways 403 and by extracting input highway identification data 407 from the extracted test cells 406. The test cell monitor 405 monitors whether or not a predetermined number of test cells 406 corresponding to the number of paths on all self-routing modules 401, through which cells inputted from each of the input highways 402 pass to be outputted to each of the output highways 403.

Here, the test cell monitor 405 tests self-routing modules 401 by monitoring whether or not a predetermined number of test cells from respective input highways 402 are detected in a predetermined period of time e.g. after the test cell generator 404 starts generating test cells 406.

In the configuration shown in Figure 4A, when the multi-stage self-routing channel 401 has a fixed configuration, the number of paths through which a cell inputted from an input highway 402 to be outputted to an output highway 403 in the multi-stage self-routing channel 401 is of a determined number. Hence, the test cell generators 404 on respective input highways 402 generate test cells 406 so that they collectively pass through all possible paths, and attach to respective test cells 406 the input highway identification data 407 indicating which input highways 402 supply the test cells 406. The test cell monitors 405 on respective output highways 403 recognize input highway identification data 407 attached to test cells 406 verified as test cells 406 by test cell identification data 408. Then, the test cell monitors 405 test the self-routing modules in the ATM channel by monitoring whether or not a predetermined number of the test cells 406 corresponding to the appropriate input highways 402 are detected in a predetermined time period e.g. after the test cell generators 404 start generating test cells 406.

The above described configuration shown in Figure 4A enables an asynchronous transfer mode channel to be tested with ease by simply counting the numbers of test cells from respective input highways, without having to collect information from respective crossing points in self-routing modules regarding whether or not the crossing points switch test cells.

Figure 5 is a schematic view for explaining a third form of this invention.

501-1 through 501-N are plural trunks for interfacing with other offices. 502 is an ATM switching network. 503 is a test cell generating trunk. 504 is a test cell outputted from a test cell generating trunk 503. 505 is a test cell indication bit in the test cell 504 for test cell identification. 506 is a path selection data for specifying the path to be tested.

The turnaround parts 507-1 through 507-N are provided in the trunks 501-1 through 501-N respectively connecting external transmission paths and ATM switching network 502. When the test cell indication bits 505 in the test cells 504 from cells transmitted through the ATM switching network 502 are detected, the turnaround parts 507-1 through 507-N turn the extracted test cells 504 around to the paths to be tested in the ATM switching network 502.

The test cell generating trunk 503 is provided on the input side of the ATM switching network 502. It generates a test cell 504 whose header part has the test cell identification bit 505 for test cell identification and supplies it to the ATM switching network 502.

Upon receipt of a test cell 504 and detection of a test cell identification bit 505, the turnaround part 507-i in the trunk 501-i (1≦≦N), the turnaround part 507-i turns the extracted test cell 504 around to the paths to be tested corresponding to the path selection data 506 attached to the received test cell 504.

By judging whether or not the ATM switching network 502 returns test cell 504 to the test cell generating trunk 503 that generates the test cell 504 in a predetermined period of time, is can be tested whether or not the path set for the test cell 504 is normal.

### Explanation Of A First Preferred Embodiment

Figure 6 is a block diagram of a first preferred embodiment of this invention. This configuration of an ATM switching system corresponds to that shown in Figure 3, which is a schematic view for explaining a first form of this invention.

In Figure 6, the parts which have the same numbers as those in Figure 1, which shows a prior art configuration, have the same functions.

What the first preferred embodiment is different from the prior art shown in Figure 1 is that test cell generating trunks 601, in addition to the ordinary trunks 102, are connected to the respective MUXs 103 for multiplexing their outputs to the respective input highways 104 through the VCC 105. The test cell generating trunks 601 generates test cells 602 to be multiplexed over the respective input highways 104 at their free cell timings.

Figure 7 shows the configuration of a switch 201 (Refer to Figure 2.) in an SRM 107 in the first preferred embodiment shown in Figure 6.

First, a header checker 701 recognizes the tag of an inputted ATM cell, and stores the ATM cell in a buffer 702 when it judges the ATM cell must to be switched by the switch to which the header checker 701 belongs to. The ATM cell thus stored in the buffer 702 is fed to a multiplexer (MUX) 703 to be multiplexed over an output side highway, thereby completing the switching operation for the ATM cell.

When the header checker 701 judges that an ATM cell must not be switched by the switch to which the header checker 701 belongs to, the ATM cell is sent to a next switch 201 through a line branching before the header checker 701.

A feature shown in Figure 7 which is relevant to the first form of this invention is a maintenance scan (MSCN) collector 704. When a test cell 602 generated by the test cell generating trunk 601 shown in Figure 6 is written into the buffer 702, the MSCN 704 detects such a state as an MSCN signal 605, and notifies a central controller (CC) 604 through a controller interface (CPIF) 603 shown in Figure 6.

Figure 8A shows the data configuration of an ATM cell in the first preferred embodiment, and Figure 8B shows the configuration of the tag part of an ATM cell shown in Figure 8A.

An ATM cell has ordinarily the following data structure.

As shown in Figure 8A, an ATM cell has an information part 802, with e.g. forty-eight (48) octets, for storing communication information. An ATM cell also has a header part 801, with e.g. five (5) octets, for storing a VCI or a VPI (the address information for the receiving side subscriber), a CRC code for error correction, information specifying the payload type of the cell, and information indicating whether or not the cell should be abandoned during a congestion. An ATM cell also has a tag part 803, with e.g. one (1) octet, for storing information of the path in the MSSR 106 over which the ATM cell should be routed, to be outputted to the destined one of the output highways 108. The VCC 105 shown in Figure 6 attaches the tag part 803 to the ATM cells it receives.

Figure 8B shows the configuration of the tag part 803 shown in Figure 8A.

A tag part 803 has three (3) stages of two (2) bit tag data 804 for having the respective switches 201 (Refer to Figure 2.) in each of the three (3) stage SRMs 107 select ATM cells. In addition, the tag part 803 has test cell data 805 identifying that an ATM cell containing the test cell data 805 is a test cell. On the other hand, the tag part 803 of an ATM cell inputted from subscriber lines 101 to trunks 102 do not have the test cell data 805.

The operation of the first preferred embodiment having the above configuration is explained below.

In the first preferred embodiment, the switches 201, shown in Figures 2 and 7, in the SRMs 107 in the MSSR 106 are tested by the test cells 602 generated by the test cell generating trunk 601 shown in Figure 6.

The CC 604 shown in Figure 6 instructs through the CPIF 603 the test cell generating trunks 601 connected to predetermined input highways 104 to generate test cells. Such an instruction is executed by a maintenance command called a maintenance signal distributor (MSD).

Upon receiving the instruction, the test cell generating trunks 601 multiplexes the test cells 602 having the data structure shown in Figures 8A and 8B over the corresponding input highways 104. In this case, the test cell data 805 having test cell identification data are attached to the tag part 803 shown in Figure 8B, as described above.

Here, the ATM switching system uses a synchronous optical network (SONET) as a transmitting means. A SONET frame contains data, such as section overhead and path overhead, unnecessary for the switching in the MSSR 106. The timings at which such unnecessary data are multiplexed can be used for free cell timings (invalid data cell timings having the same lengths as ordinary cells). When few data need to be transmitted over the input highways 104, there are necessarily some empty cell timings. In the first preferred embodiment, such free cell timings are used for multiplexing the test cells 602.

The test cell generating trunk 601 notifies the CC 604 through the CPIF 603 of the emission of test cells 602, concurrently with multiplexing the test cells 602.

The header checker 701 (Figure 7) in a switch 201 in one of the SRMs 107 shown in Figure 6 recognizes the test cell data 805 in the tag part 803 of the received ATM cell. When the tag part 803 contains the test cell data 805, the ATM cell is a test cell 602, which the buffer 702 unconditionally stores. The MSCN collector 704 shown in Figure 7 detects the receipt of the test cell 602, and outputs the MSCN signal 605.

In response to this, the CC 604 activates a timer (not shown) on receiving a notification from the test cell generating trunk 601 of the emission of the test cell 602. Then, the CC 604 watches whether of not the MSCN signals 605 are received through the CPIF 603 from all switches 201 relevant to the input highway 104 to which the test cell 602 is sent. Thus, the CC 604 tests the normality of the switches 201.

The above described testing operation is performed for all switches 201 (Refer to Figure 2.) in the SRMs 107 of the MSSR 106 by having all test cell generating trunks 601 output test cells 602 to be multiplexed over the respective input highways 104, which are connected to the MSSR 106.

It is possible to configure the ATM channel testing apparatus to have only one test cell generating trunk 601 for all input highways 104 by having test cells outputted from an output highway 108 is re-inputted to an input highway 104 not yet tested.

In the first preferred embodiment, by having the header checker 701 recognize the test cell data 805 (Figure 8B) in the tag part 803 (Figure 8A) of the received ATM cell for identifying a test cell 602, which the buffer 702 stores unconditionally. Accordingly, all the switches 201 relevant to an input highway 104 on which an ATM cell is multiplexed detect the ATM cell. However, the first embodiment can be modified by adding predetermined data to the free space in the tag part 803 shown in Figure 8B, so that only the switches 201 on a predetermined path detects the test cell 602. There are other controlling methods for the variants of the first form of this invention.

### Explanation Of A Second Preferred Embodiment

Figure 9 is a block diagram of a second preferred embodiment of this invention. This configuration of an ATM switching system corresponds to that shown in Figure 4A, which is a schematic view for explaining a second form of this invention.

A multi-stage self-routing channel (MSSR) 901 exchanges cells inputted from four (4) input highways 904, #0 through #3, and outputs them to four (4) output highways 905, #0 through #3. Here, the numbers of input highways and output highways are not limited to four (4). A central processor (CPR) 903 connected through a controller interface (CPIF) 902 controls the MSSR 901. In addition, four (4) test cell monitors (TCC) 906, #0 through #3, connected respectively to the four (4) output highways 905, #0 through #3, detect the states regarding which input highways 904 supply how many test cells to which output highways 905, and notify the states to the CPR 903 through a signal line 907.

Figure 10 shows the configuration of the MSSR 901 shown in Figure 9 in the second preferred embodiment.

The MSSR 901 corresponds to an SRM set 1001 inside the dashed line frame shown in Figure 10, comprising six (6) SRMs 1001-1-1 through 1001-3-2, each switching cells supplied from two (2) input lines #0 and #1 to two (2) output lines #0 and #1, paired in three (3) stages. That is, three (3) SRM pairs 1001-1-1 and 1001-1-2, 1001-2-1 and 1001-2-2, and 1001-3-1 and 1001-3-2 are arrayed from the input highway side to the output highway side in a 2X3 configuration having two (2) rows and three (3) stages. Four (4) VCCs (Virtual Channel Converters) 1002, #0 through #3, are connected respectively to the four (4) input highways 904, #0 through #3. VCC pairs #0 and #1 of 1002, and #2 and #3 of 1002 are connected respectively to the input lines #0 and #1 of the first stage SRMs 1001-1-1 and 1001-1-2. The functions of the VCCs 1002 will be elaborated later.

Figure 11 shows the configuration of an SRM in the SRM set 1001 common to all the SRMs 1001-1-1 through 1001-3-2 in the second preferred embodiment, which is similar to that shown in Figure 2. Four (4) crossing points C₀₀ through C₁₁ shown in Figure 11 correspond to the switches 201 shown in Figure 2. As shown in Figure 11, an SRM in the SRM set 1001 switches cells supplied from two (2) input lines 1101, #0 and #1, to two (2) output lines 1102, #0 and #1. Crossing point C₀₀ or C₁₀ selectively outputs cells supplied from #0 of the input lines 1101 to #0 or #1 of the output lines 1102. Crossing point C₀₁ or C₁₁ selectively outputs cells supplied from #1 of the input lines 1101 to #0 or #1 of the output lines 1102. The configuration of the four (4) crossing points C₀₀ through C₁₁.

Figure 12 shows the configuration of a VCC in the second preferred embodiment, which is common to all the VCCs 1002, #0 through #3, shown in Figure 10.

A VPI/VCI detector 1201 detects a VPI (Virtual Path Identifier) and a VCI (Virtual Channel Identifier) attached to the header part of the cells supplied from the input highways 904.

A table read controller 1202 refers to a VPI/VCI table 1203 using the above detected VPI and VCI as the address and reads the corresponding tag data.

A multiplexer 1205 outputs cells delayed by a delay unit 1204 after attaching tag data read by the table read controller 1202 to the head ends of the cells. Here, the CPR 903 shown in Figure 9 sets through the CPIF 902 the conversion table from VPIs and VCIs to tag data stored in the VPI/VCI table 1203.

A test cell generator (TCG) 1206 generates test cells described later when the MSSR 901 (Figure 9) is tested. A multiplexer 1205 multiplexes the test cells on free time slots of the input highways 904.

Figure 13 shows the configuration of a crossing point in the second preferred embodiment, which is common to all the crossing points C₀₀ through C₁₁ shown in Figure 11.

A tag comparator 1301 detects the tags attached to the head ends of the cells supplied from #0 or #1 of the input lines 1101 (Refer to Figure 11.) and judges whether or not to switch the cells at its own crossing point. Here, when it is judged to switch the cells at its own crossing point, a gate 1302 is turned on, and a buffer 1303 receives the cells inputted succeedingly to the tag data from #0 or #1 of the input lines 1101. Then, a multiplexer 1304 multiplexes the cells stored in the buffer 1303 on the free time slots of #0 or #1 of the output lines 1102. (Refer to Figure 11.)

Figure 14 shows the configuration of an ATM cell in the second preferred embodiment. Cells supplied from the input highways 904 shown in Figure 9 respectively comprise an information part 1402 having a data length of forty-eight (48) octets for storing actual communication data and a header part 1401 having a data length of five (5) octets for storing address data.

The VCCs 1002 shown in Figures 10 and 12 attach respective tag parts 1403 at the head ends of the cells, i.e. before the header parts 1401. A tag part 1403 comprises a first tag datum 1404, a second tag datum 1405 and a third tag datum 1406 each with one (1) bit, in the second preferred embodiment. The first tag datum 1404 contains information specifying to which one of the output lines 1102 #0 and #1 its own cell supplied to SRM 1001-1-1 or SRM 1001-1-2 in the first stage of the MSSR 901 (Refer to Figure 10.) is switched. If the value is zero (0), the first tag datum 1404 specifies the cell to be switched to #0 of the output lines 1102. If the value is one (1), the first tag datum 1404 specifies the cell to be switched to #1 of the output lines 1102. As with the first tag datum 1404, the second tag datum 1405 contains information specifying to which one of the output lines 1102 #0 and #1 its own cell supplied to SRM 1001-2-1 or SRM 1001-2-2 in the second stage of the MSSR 901 is switched. Also as with the first tag datum 1404, the third tag datum 1406 contains information specifying to which one of the output lines 1102 #0 and #1 its own cell supplied to SRM 1001-3-1 or SRM 1001-3-2 in the third stage of the MSSR 901 is switched.

On receiving the data specified by the first tag datum 1404, the second tag datum 1405 and the third tag datum 1406, respective crossing points C₀₀ through C₁₁ in each of the SRMs 1001-1-1 through 1001-3-2 shown in Figure 10 have their respective comparators 1301 (Refer to Figure 13.) refer to the first tag datum 1404, the second tag datum 1405 or the third tag datum 1406, according to the stage of the SRM in the SRM set 1001 to which the crossing points C₀₀ through C₁₁ belong. If a crossing point is connected to #0 of the output lines 1102, the crossing point switches the cell whose first tag datum 1404, second tag datum 1405 or third tag datum 1406 corresponding to its own stage number has value zero (0) and does not switch the cell whose first tag datum 1404, second tag datum 1405 or third tag datum 1406 corresponding to its own stage number has value one (1).

For instance, assume that #0 of the VCCs 1002 attaches a three (3) bit value "101", as the first tag datum 1404, the second tag datum 1405 and the third tag datum 1406, to a cell supplied from #0 of the input highways 904 to #1 of the input lines of SRM 1001-1-1 shown in Figure 10, based on the VPI and VCI at the header of the cell. In this case, crossing point C₁₀ (Refer to Figure 11.) of SRM 1001-1-1 in the first stage of the MSSR 901 switches to #1 of the output lines the cell supplied from #0 of the input lines of SRM 1001-1-1. Further, crossing point C₀₀ of SRM 1001-2-2 in the second stage of the MSSR 901 switches to #0 of the output lines the cell supplied from #0 of the input lines of SRM 1001-2-2. Finally, crossing point C₁₁ of SRM 1001-3-1 in the third stage of the MSSR 901 switches to #1 of the output lines the cell supplied from #1 of the input lines of SRM 1001-3-1. As shown in Figure 10, #1 of the output lines of SRM 1001-3-1 is connected to #1 of the output highways 905. Therefore, the three (3) stage SRMs 1001-1-1, 1001-2-2 and 1001-3-1 of the MSSR 901 switch to #1 of the output highways 905 the cell supplied from #0 of the input highways 904.

Figure 15 shows the tag datum combinations in tag parts attached to test cells in the second preferred embodiment.

When the MSSR 901 shown in Figure 9 is tested, the TCG 1206 in each of the VCCs 1002, #0 through #3, respectively connected to the input highways 904, #0 through #3, sequentially generates eight (8) kinds of test cells No.1 through No.8 to which eight (8) combinations of the first tag datum 1404, the second tag datum 1405 and the third tag datum 1406 shown in Figure 15 are attached. Those test cells are multiplexed on #1 of the input highways 904. At the same time, as shown in Figure 14, a flag (TCA) 1408 for test cell identification and an input highway number (IHN) 1407 indicating the number of the input highways 904 supplying the test cell are attached to the tag part 1403 of each of the test cells. The header part 1401 and the information part 1402 (Refer to Figure 14.) of a test cell have void data which are not meaningful.

A test cell inputted from one of the input highways 904, #0 through #3, to the MSSR 901 passes through the three (3) stages in the SRM set 1001 to be supplied to one of the output highways 905, #0 through #3. Here, as shown in Figure 1, one SRM in the SRM set 1001 has two (2) crossing points for one of the input lines 1101 , and two (2) output lines 1102 selected at a crossing point. Hence, there are eight (8=2³) possible paths for a cell inputted from from one of the input highways 904, #0 through #3, to the MSSR 901 to be outputted from one of the output highways 905, #0 through #3. Accordingly, the eight (8) kinds of test cells No.1 through No.8 to which tag data combinations shown in Figure 15 are attached enable all the crossing points in the SRM set 1001 through which cells inputted from one of the input highways 904 pass to switch the test cells.

#0 through #3 of the TCCs 906 (Refer to Figure 9.) provided respectively on #0 through #3 of the output highways 905 detect eight (8) test cells generated for each among #0 through #3 of the input highways 904.

Figure 16 shows the configuration of a TCC 906 in the second preferred embodiment.

There are two (2) possible paths for a cell inputted from one of the input highways 904 to be outputted to one of the output highways 905. For example, a cell inputted from #0 of the input highways 904 to SRM 1001-1-1 (Refer to Figure 10.) is outputted from SRM 1001-3-1 to #0 of the output highways 905 through one of the two (2) paths by way of either SRM 1001-2-1 or SRM 1001-2-2. This is the case for other combinations of the input highways 904 and the output highways 905. Therefore, as long as all the crossing points in the SRM set 1001 of the MSSR 901 are normal, each of the output highways 905 must be able to detect two (2) test cells from each of the input highways 904.

Accordingly, before the TCG 1206 in a VCC 1002 begins generating test cells, after a reset signal (not shown) from the CPR 903 resets #0 through #3 of one (1) bit counters 1602 (Refer to Figure 16.) in #0 through #3 of the TCCs 907, the CPR 903 through the CPIF 902 instructs #0 through #3 of the TCGs 1206 to generate test cells.

Thereafter, the test cell extractor 1601 in each among #0 through #3 of the TCCs 906 extracts the IHN 1407 and the TCA 1408 of the tag part 1403 of an inputted cell. When the TCA 1408 identifies the cell as a test cell, one of the one (1) bit counters 1602, #0 through #3, corresponding to the number of the input highways 904, #0 through #3, specified by the IHN 1407, is counted up.

Upon counting up twice, respective counters 1602 notify a monitor result notifier 1603 of the corresponding counter number (one of #0 through #3). Then, the monitor result notifier 1603 through the signal line 907 notifies the CPR 903 of the fact that the all the crossing points in the SRM set 1001, which switch test cells from the one corresponding to the counter number of the input highways 904, are normal.

The CPR 903 judges whether or not the MSSR 906 is normal by monitoring whether or not the notifications corresponding to the respective input highways 904 are received in a predetermined period of time after an instruction is issued for test cell generation.

As described above, the second preferred embodiment enables a channel to be tested just by monitoring whether or not a predetermined number of test cells from respective input highways 904 are detected at respective output highways 905 through attaching the input highway number showing which one of the input highways 904 generates the test cell to the test cell.

The second embodiment takes up a case in which there are four (4) input highways 904 and four (4) output highways 905 and the MSSR 901 comprises the SRM set 1001 having two (2) rows and three (3) stages. However, the above case by no means precludes applying the second form of this invention to other channel configurations. When the numbers of the pertinent elements change, only a few modifications need to be made. That is, the respective TCGs 1206 generate a different number of test cells, which the respective TCCs 907 detect.

### Explanation Of A Third Preferred Embodiment

Figure 17 is a-block diagram of a third preferred embodiment of this invention. This configuration of an ATM switching system corresponds to that shown in Figure 5, which is a schematic view for explaining a third form of this invention.

In Figure 17, 1701-1 through 1701-N and 1702-1 through 1702-M are ordinary trunks, 1703 is a test cell generating trunk, 1704-1 and 1704-2 are multiplexers, 1705 is an ATM switch module, 1706-1 and 1706-2 are demultiplexers, and 1707 is a central processor (CP).

Between the outside of the trunks 1701-1 through 1701-N and 1702-1 through 1702-M, i.e. other offices or subscribers, and this ATM switching system, signals are transmitted over the transmission paths according to an interoffice protocol such as the SONET (Synchronous Optical Network) protocol. The ordinary trunks 1701-1 through 1701-N and 1702-1 through 1702-M respectively extract an ATM cell from a signal on the transmission paths and send the ATM cells to the ATM switch module 1705 through either multiplexer 1704-1 or 1704-2. The ATM cell switched by the ATM switch module 1705 is sent through demultiplexer 1706-1 to the respective ones of ordinary trunks 1701-1 through 1701-N or through demultiplexer 1706-2 to the respective ones of ordinary trunks 1702-1 through 1702-M, and the ordinary trunks 1701-1 through 1701-N and 1702-1 through 1702-M in turn send the ATM cell to the transmission paths.

The paths from input trunks to output trunks are set in a plurality according to the size of the ATM switch module 1705, which are determined by a tag attached at the entrance of either multiplexer 1704-1 or 1704-2.

The test cell generating trunk 1703 generates a test cell with its test cell identification bit set at a predetermined position in the header part turned on, tag data giving an instruction of a predetermined test pattern and tested path stored in its information part, and a tag showing the first trunk number existing on the tested path attached before the header part, upon receiving from the central processor (CP) 1707, as a maintenance command called maintenance signal distributor (MSD), a path testing instruction, trunk numbers of the tested trunks, path numbers of the tested paths on the ATM switch module 1705.

The ATM switch module 1705 switches the test cell according to the tag attached before the header part and transfers it to a first tested ordinary trunk, e.g. ordinary trunk 1701-1.

The first tested ordinary trunk 1701-1 monitors the header part in respective cells sent from the ATM switch module 1705. Upon detecting a test cell identification bit being on, the tested trunk 1701-1 judges an input of a test cell and turns the test cell around to a line on the input side of the ATM switch module 1705.

During the turnaround, multiplexer 1704-1 extracts a tag indicating the trunk number of the second trunk existing on the tested path from the tag data stored in the information part of the test cell and reattaches the tag before the header part of the test cell. Accordingly, the ATM switch module 1705 switches the test cell turned around by the first tested ordinary trunk 1701-1 according to the reattached tag and sends it to the second tested ordinary trunk, e.g. 1701-N, on the tested path.

Similarly, the test cell is sequentially transferred to the respective trunks on the tested path and turned around. When the test cell is turned around by the last trunk on the tested path, either multiplexer 1704-1 or 1704-2 extracts a tag indicating the test cell generating trunk 1703 which is the final end of the tested path from the tag data stored in the information part of the test cell, and reattaches the tag before the header part of the test cell.

As a result, the test cell returns in the end to the test cell generating trunk 1703, which judges whether or not the tested path is normal by detecting whether or not the content of the information part of the test cell before the test cell is emitted is the same as that after the test cell returns.

Figure 17 shows an exemplary sequence from R1 to R21 as the path tested by the test cell.

Although Figure 17 shows, for convenience, the ordinary trunks 1701-1 through 1701-N and 1702-1 through 1702-M as well as the test cell generating trunk 1703 have separate reception trunks for receiving signals from other offices and emission trunks for emitting signals to other offices, the reception trunks and emission trunks are actually the receiving parts and emitting parts within the same trunks.

Figure 18 shows the configuration of the test cell generating trunk 1703 in the third preferred embodiment.

In Figure 18, an MSD receiver 1801 receives a maintenance signal distributor (MSD) for path test instruction set in the central processor (CP) 1707 when the ATM switch module 1705 is tested.

A tag data generator 1802 generates tag data, on receipt of the path number of the tested path and the trunk number of the tested trunk on the tested path.

A test pattern generator 1803 generates a predetermined test pattern attached to the information part of a test cell.

A test cell data generator 1804 generates test cell data attached to the information part of a test cell, based on the tag data from the tag data generator 1802 and the test pattern from the test pattern generator 1803.

A match detector 1805 detects a match between the test pattern generated by the test pattern generator 1803 and the test pattern stored in the information part of a test cell from demultiplexer (DMX) 1706-2 (Figure 17).

An MSCN (Maintenance Scan) register 1806 stores the comparison result obtained by the match detector 1805.

The test cell generating trunk 1703 having the configuration shown in Figure 18 is used below for explaining the operations of testing the ATM switching system shown in Figure 17, which assumes existence of two (2) tested trunks A (e.g. ordinary trunk 1701-1) and B (e.g. ordinary trunk 1701-2), in addition to the test cell generating trunk 1703, on the tested path.

The MSD receiver 1801 in the test cell generating trunk 1703 receives from the central processor (CP) 1707 the trunk numbers of the tested trunks A (e.g. ordinary trunk 1701-1) and B (e.g. ordinary trunk 1701-2) and the path number in the ATM switch module 1705 from trunk A to trunk B.

Based on the above information, the tag data generator 1802 generates three (3) tags for the tested paths, namely, the tag for the path from the test cell generating trunk 1703 to tested trunk A, the tag for the path from tested trunk A to tested trunk B, and the tag for the path from tested trunk B to the test cell generating trunk 1703. The tag data generator 1802 outputs to multiplexer 1704-2 the tag for the path from the test cell generating trunk 1703 to tested trunk A as the tag to be attached before the header part of the test cell. The tag data generator 1802 outputs to the test cell data generator 1804 all other tags as a part of the information part of the test cell. The test cell data generator 1804 outputs to multiplexer 1704-2 (Figure 17) the above tag data together with the test pattern from the test pattern generator 1803 as test cell data.

Multiplexer 1704-2 (Figure 17) generates a test cell having a tag for the path from the test cell generating trunk 1703 to the trunk A attached before the header part with its test cell identification bit set at a predetermined position in the header part turned on and the test cell data from the test cell data generator 1804 stored in its information part. As described above, the test cell data comprise respective data of the test pattern, the tag for the path from tested trunk A to tested trunk B and the tag for the path from tested trunk B to the test cell generating trunk 1703.

The following is a description of the actions when the tested paths are normal.

First, a test cell is sent through multiplexer 1704-2, the ATM switch module 1705 and demultiplexer 1706-1 to tested trunk A (e.g. ordinary trunk 1701-1) which is one of the two (2) tested trunks.

Tested trunk A returns the received test cell to the ATM switch module 1705 instead of transferring it to a foreign office. At this time, multiplexer 1704-1 extracts from the information part of the returned test cell the tag for the path from tested trunk A to tested trunk B and replaces the tag for the path from test cell generating trunk 1703 to tested trunk A attached before the header part of the returned test cell with the extracted tag.

Thus, the returned test cell is sent to tested trunk B (e.g. ordinary trunk 1701-N) through multiplexer 1704-1, the ATM switch module 1705 and demultiplexer 1706-1, according to the replaced tag.

Tested trunk B returns the received test cell to the ATM switch module 1705 instead of transferring it to a foreign office. At this time, multiplexer 1704-1 extracts from the information part of the returned test cell the tag for the path from tested trunk B to the test cell generating trunk 1703 and replaces the tag for the path from tested trunk A to tested trunk B attached before the header part of the returned test cell with the extracted tag.

Thus, the returned test cell is sent to the test cell generating trunk 1703 through multiplexer 1704-1, the ATM switch module 1705 and demultiplexer 1706-1, according to the replaced tag.

The match detector 1805 in the test cell generating trunk 1703 compares the test pattern attached to the information part of the test cell returned after passing through tested trunks A and B as well as the ATM switch module 1705 with the test pattern generated by the test pattern generator 1803. If the both match, it is confirmed that the test paths including the ATM switch module 1705 are normal. Also the fact that the test cell is returned in a predetermined period of time proves that the normality of the tag paths.

The MSCN register 1806 stores the above described test result. The central processor (CP) 1707 regularly monitors the content of the MSCN register 1806 by software processing.

Figure 19 shows the configuration of the turnaround part of a tested trunk, which is one of the ordinary trunks 1701-1 through 1701-N and 1702-1 through 1702-M, in the third preferred embodiment.

In Figure 19, 1901 is a test cell extractor, 1902 is a transmission path - switch interface circuit (SSINF) for converting frame data format in the SONET format to a data format comprising solely a cell, 1903 is a timing generator (TMG), 1904 is a selector for selectively outputting the output from the test cell extractor 1904 or the output from the transmission path - switch interface circuit (SSINF) 1902 according to the clock signals from the timing generator (TMG) 1903.

The test cell extractor 1901 monitors whether or not the header part of the cell received from the ATM switch 1705 has a test cell identification bit, extracts the cell when the test cell identification bit is on, and stores the cell in an internally provided buffer (not shown).

Since the transmission path - switch interface circuit (SSINF) 1902 extracts only the cell part in the frame data of the SONET format transferred from a foreign office or a subscriber over a transmission path and does not extract the header part such as a SOH (Section Overhead), a LOH (Line Overhead) and a POH (Path Overhead), the input periods for a SOH, a LOH and a POH remain free. Therefore, the timing generator (TMG) 1903 detects the free periods and causes the selector 1904 to output to the ATM switch module 1705 the test cell stored in the test cell extractor 1901 during the free periods. This enables the paths in an ATM switching system to be tested even when ordinary cells other than a test cell are switched.

Figure 20 shows the data format of a transmission path in the third preferred embodiment.

The example shown in Figure 20 illustrates SONET STS-3c as the data format on the transmission path. In this case, one (1) frame comprises two-hundred seventy (270) bytes by nine (9) rows, of which two-hundred (260) bytes by nine (9) rows, excepting nine (9) bytes by nine (9) rows for a SOH and one (1) byte by nine (9) rows for a LOH, contain a cell having fifty-three (53) bytes to be transmitted. Therefore, it becomes possible to output a test cell to the ATM switch module 1705 during the input periods for the SOH, LOH and POH.

Figure 21 illustrates the cell format conversion in the third preferred embodiment performed by the transmission path - switch interface circuit (SSINF) 1902 shown in Figure 19.

There are UNI (User Node Network) and NNI (Network Node Interface) based cell formats as the data formats for the cell having fifty-three (53) bytes. UNI stands for an interface corresponding to a transmission path connecting a subscriber and a switching system, and NNI stands for an interface corresponding to a transmission paths connecting between switching systems.

The header part, preceding the information part having its data, of the UNI based cell format comprises respective data of GFC (Generic Flow Control), VPI (Virtual Path Identifier), VCI (Virtual Channel Identifier), HEC (Header Error Control), PT (Payload Type), RE (Reserve) and CL (Cell Loss Priority).

The header part, preceding the information part having its data, of the NNI based cell format comprises respective data of VPI (Virtual Path Identifier), VCI (Virtual Channel Identifier), HEC (Header Error Control), PT (Payload Type), RE (Reserve) and CL (Cell Loss Priority).

As described earlier, the transmission path - switch interface circuit (SSINF) 1902 shown in Figure 19 extracts only the cell part in frame data of the SONET format, and converts the above described UNI or NNI based cell format to the cell format shown in the lower part of Figure 21. The header part, preceding the information part having its data, of this cell format comprises respective data of TAG (Tag), VPI (Virtual Path Identifier), VCI (Virtual Channel Identifier), PT (Payload Type), RE (Reserve) and CL (Cell Loss Priority), shedding HEC (Header Error Control) and GFC (Generic Flow Control) if any. As a result, the cell format is converted to a format of twenty-seven (27) bytes by sixteen (16) bits.

In the third preferred embodiment, the ATM switch module 1705 receives both the test cell and ordinary cells from the transmission path in the cell format shown in the lower part of Figure 21. As described earlier, the header-part of the test cell has a test cell identification bit and the information part of the test cell has a test pattern and tag data for designating the tested paths.

Figure 22 shows the configuration of the tag operator in multiplexer (MX) 1704-1 or 1704-2 (Figure 17) in the third preferred embodiment.

In Figure 22, 2201 is a test cell identification bit detector, 2202 is a timing generator (TMG) for generating a selecting signal when the test cell is detected, 2203 is a VCI conversion table (VCC), and 2204 and 2205 are selectors.

The VCC 2203 replaces the VCIs attached to the header parts of all cells from respective subscribers with the new VCIs specifying the next ATM switching system. The timing generator (TMG) 2202 instructs the replacements to selector 2204. The VCC 2203 attaches to the head ends of the cells tags specifying the respective paths in the ATM switch module 1705 (Figure 17) through which the inputted cells pass to be outputted to the targeted transmission paths. The timing generator (TMG) 2202 instructs the attachments to selector 2205. The VCC 2203 is a table rewritable by software processing. When a subscriber places a call to another, the central processor (CP) 1707 (Figure 17) calculates the tag and the output VCI corresponding to the input VCI corresponding to the call and sets them in the VCC 2203.

In contrast to the ordinary cells processed as described above, the test cell turned around from one of the ordinary trunks 1701-1 through 1701-N (Figure 17) stores in its information part as tag data the tags to be attached to the test cell itself, as described earlier. Thus, when the test cell identification bit detector 2201 in multiplexer (MX) 1704-1 or 1704-2 detects an arrival of the test cell, the timing generator (TMG) 2202 outputs a selecting signal to the selectors 2204 and 2205. This causes selector 2204 to output data in the header part of the test cell in lieu of the new VCIs replaced by the VCC 2203 and selector 2205 to output as a tag a part of the tag data stored in the information part of the test cell in lieu of a tag attached by the VCC 2203.

Thus, multiplexer (MX) 1704-1 or 1704-2 (Figure 17) realizes processing for the test cell.

## Claims

1. A channel testing apparatus for testing a channel for communication with a fixed length cell including a header field of routing information and an information field of data (301) comprising:
a test cell generating trunk means (302) provided on the input side of said channel, for generating a test cell (304, 305) to whose head end a tag (304) including test cell information, which identifies a test cell and specifies the passage of a predetermined path in said channel, is attached, and for supplying the test cell to said channel;
a test cell detecting means (307) provided in a switch forming said channel, for detecting as maintenance scan signal whether or not said test cell is switched; and
a controlling means (309) for testing a switch on a path by judging whether or not said test cell detecting means, provided in said switch on said path corresponding to the test cell information included in said test cell, detects said maintenance scan signal synchronised with the generation of said test cell.

2. The channel testing apparatus according to claim 1, wherein:
said channel comprises a multi-stage self-routing channel (106) having self-routing modules (107) connected in plural stages and said switch is provided in each of said self-routing modules.

3. The channel testing apparatus according to claim 1, wherein:
said test cell generating trunk means is provided in each input highway connected to said channel and multiplexes said test cell on said input highway at its free cell timing.

4. The channel testing apparatus according to claim 3, wherein:
said tag attached to said head end of said test cell generated by said test cell generating trunk means includes test cell information instructing said test cell to pass through each said switch in said channel corresponding to said input highway in which said test cell generating trunk means is provided.

5. The channel testing apparatus according to claim 1, wherein:
said controlling means tests said switch on said path by judging whether or not said test cell detecting means, in said switch on said path specified by said test cell information, detects said maintenance scan signal included in said test cell in a predetermined period of time after said test cell generating trunk means generates said test cell.

## Patentansprüche

1. Kanaltestgerät zum Testen eines Kanals zur Kommunikation mit einer Zelle fester Länge, die ein Anfangsblock-Feld zum Leiten von Information und ein Informationsfeld von Daten (301) enthält, wobei das Gerät folgendes aufweist:
eine Testzellen erzeugende Fernleitungseinrichtung (302), die auf der Eingangsseite des Kanals vorgesehen ist, zum Erzeugen einer Testzelle (304, 305), an deren vorderem Ende ein Tag (304) mit Testzelleninformation angebracht ist, die eine Testzelle identifiziert und das Durchlaufen eines vorbestimmten Pfads in dem Kanal spezifiziert, und zum Zuführen der Testzelle zu dem Kanal;
eine Testzellenerfassungseinrichtung (307), die in einem Schalter vorgesehen ist, der den Kanal bildet, zum Erfassen als Wartungsabtastsignal, ob die Testzelle geschaltet wird oder nicht; und
eine Steuereinrichtung (309) zum Testen eines Schalters auf einem Pfad durch Beurteilen, ob die Testzellenerfassungseinrichtung, die in dem Schalter auf dem Pfad entsprechend der Testzelleninformation, die in der Testzelle enthalten ist, vorgesehen ist, das Wartungsabtastsignal synchronisiert mit dem Erzeugen der Testzelle erfaßt oder nicht.

2. Kanaltestgerät nach Anspruch 1, wobei:
der Kanal folgendes aufweist:
einen mehrstufigen selbstleitenden Kanal (106) mit selbstleitenden Modulen (107), die in vielen Stufen verbunden sind, und wobei der Schalter in jedem der selbstleitenden Module vorgesehen ist.

3. Kanaltestgerät nach Anspruch 1, wobei:
die Testzellen erzeugende Fernleitungseinrichtung in jedem Eingangs-Highway vorgesehen ist, der mit dem Kanal verbunden ist, und die Testzelle auf den Eingangs-Highway bei seiner freien Zellenzeit multiplext.

4. Kanaltestgerät nach Anspruch 3, wobei:
das Tag, das an dem vorderen Ende der durch die Testzellen erzeugende Fernleitungseinrichtung erzeugten Testzelle angebracht ist, Testzelleninformation enthält, die der Testzelle befiehlt, durch jeden der Schalter im Kanal entsprechend dem Eingangs-Highway zu laufen, in welchem die Testzellen erzeugende Fernleitungseinrichtung vorgesehen ist.

5. Kanaltestgerät nach Anspruch 1, wobei:
die Steuereinrichtung den Schalter auf dem Pfad testet, und zwar durch Beurteilen, ob die Testzellenerfassungseinrichtung in dem Schalter auf dem durch die Testzelleninformation spezifizierten Pfad das Wartungsabtastsignal, das in der Testzelle enthalten ist, in einer vorbestimmten Zeitperiode erfaßt oder nicht, nachdem die Testzellen erzeugende Fernleitungseinrichtung die Testzelle erzeugt.

## Revendications

1. Appareil de test de canal pour tester un canal pour une communication avec une cellule de longueur fixe incluant une zone d'en-tête d'information d'aiguillage et une zone d'information de données (301), comprenant :
un moyen d'artère de génération de cellule de test (302) prévu sur le côté d'entrée dudit canal, pour générer une cellule de test (304, 305) au niveau de l'extrémité de tête de laquelle une étiquette (304), incluant une information de cellule de test qui identifie une cellule de test et qui spécifie le passage d'une voie prédéterminée dans ledit canal, est liée, et pour appliquer la cellule de test sur ledit canal ;
un moyen de détection de cellule de test (307) prévu dans un commutateur formant ledit canal, pour détecter en tant que signal de balayage de maintenance, si oui ou non ladite cellule de test est commutée ; et
un moyen de commande (309) pour tester un commutateur sur une voie en appréciant si oui ou non ledit moyen de détection de cellule de test, prévu dans ledit commutateur sur ladite voie correspondant à l'information de cellule de test incluse dans ladite cellule de test, détecte ledit signal de balayage de maintenance synchronisé avec la génération de ladite cellule de test.

2. Appareil de test de canal selon la revendication 1, dans lequel :
ledit canal comprend un canal d'auto-aiguillage à multiples niveaux (106) comportant des modules d'auto-aiguillage (107) connectés selon plusieurs niveaux et ledit commutateur est prévu dans chacun desdits modules d'auto-aiguillage.

3. Appareil de test de canal selon la revendication 1, dans lequel :
ledit moyen d'artère de génération de cellule de test est prévu dans chaque artère d'interconnexion d'entrée connectée audit canal et il multiplexe ladite cellule de test sur ladite artère d'interconnexion d'entrée à son cadencement de cellule libre.

4. Appareil de test de canal selon la revendication 3, dans lequel :
ladite étiquette liée à ladite extrémité de tête de ladite cellule de test générée par ledit moyen d'artère de génération de cellule de test inclut une information de cellule de test donnant instruction à ladite cellule de test de passer au travers de chaque dit commutateur dans ledit canal correspondant à ladite artère d'interconnexion d'entrée dans laquelle ledit moyen d'artère de génération de cellule de test est prévu.

5. Appareil de test de canal selon la revendication 1, dans lequel :
ledit moyen de commande teste ledit commutateur sur ladite voie en appréciant si oui ou non ledit moyen de détection de cellule de test, dans ledit commutateur sur ladite voie spécifiée par ladite information de cellule de test, détecte ledit signal de balayage de maintenance inclus dans ladite cellule de test en une période temporelle prédéterminée après que ledit moyen d'artère de génération de cellule de test génère ladite cellule de test.
